# EUROPÄISCHE PATENTSCHRIFT

(11) **EP 3 717 339 B1**
(45) Veröffentlichungstag und Bekanntmachung des Hinweises auf die Patenterteilung: **16.08.2023**
(21) Anmeldenummer: 18826964.1
(22) Anmeldetag: 29.11.2018
(51) Int. Cl.: B62K 21/00, B62D 6/00, B62K 11/14, B62K 21/08, B60W 30/09

(54) **VORRICHTUNG ZUM BETREIBEN EINES KRAFTRADS, SYSTEM UND VERFAHREN ZUM BETREIBEN EINES KRAFTRADS**
MEANS FOR OPERATING A MOTORCYCLE, SYSTEM AND METHOD FOR OPERATING A MOTORCYCLE
DISPOSITIF PERMETTANT DE FAIRE FONCTIONNER UNE MOTOCYCLETTE, SYSTÈME ET PROCÉDÉ PERMETTANT DE FAIRE FONCTIONNER UNE MOTOCYCLETTE

(30) Priorität: 01.12.2017 DE 102017221642
(43) Veröffentlichungstag der Anmeldung: 07.10.2020
(73) Patentinhaber: Vitesco Technologies GmbH, 93055 Regensburg (DE)
(72) Erfinder: BENKERT, Maximilian, 81737 München (DE); SAWAZKI, Egor, 81737 München (DE)
(74) Vertreter: Vitesco Technologies
(86) Internationale Anmeldenummer: PCT/EP2018/082967
(87) Internationale Veröffentlichungsnummer: WO 2019/106073

(56) Entgegenhaltungen:
- EP-A1- 2 436 586
- EP-A1- 3 666 634
- WO-A1-2009/077264
- DE-A1- 10 223 366
- DE-A1-102008 059 115
- DE-A1-102013 214 517
- DE-A1-102015 217 257
- DE-A1-102015 220 901
- JP-A- 2017 206 168
- US-A1- 2017 057 542

## Beschreibung

Die Erfindung betrifft eine Vorrichtung und Verfahren zum Betreiben eines Kraftrads, welche jeweils zu einem zuverlässigen und sicheren Betrieb sowie zu einem erhöhten Komfort des Kraftrads beitragen können. Außerdem betrifft die Erfindung ein System mit einem Kraftrad.

Motor- oder Krafträder weisen in der Regel eine Lenkeinrichtung mit einem Lenker auf, welcher während eines Fahrzyklus festgehalten werden muss. Insbesondere bei längeren Fahrstrecken wird eine solche Lenkaufgabe von den Fahrern von Krafträdern als anstrengend empfunden und kann Taubheitsgefühle in den Händen verursachen. Zudem erfordert ein greifender Kontakt an einem Lenker des Kraftrads üblicherweise eine gebeugte Sitzposition, welche wiederum Schmerzen im Rücken des Fahrers hervorrufen und die Konzentrationsfähigkeit des Fahrers einschränken kann. Aus der US 2017/057542 A1 ist ein Kraftfahrzeug bekannt, welches in einem autonom fahrenden Modus betrieben werden kann. Ein Wechsel zwischen einem autonomen Fahrbetrieb und einem manuellen Betrieb kann ausgelöst werden, wenn ein an das Lenkrad Greifen oder ein Loslassen des Lenkrades erkannt wird.

Die DE 10 2015 217 257 A1, die alle Merkmale des Oberbegriffs des unabhängigen Anspruchs 1 zeigt, offenbart Sensoren zur Erkennung, ob beide Hände am Lenker eines Motorrads sind. Aus der DE 102 23 366 A1 sind druckempfindliche Sensoren im Sitz eines Motorrads zur Erkennung von Aufsassen bekannt. Die DE 10 2015 220 901 A1 offenbart eine Vorrichtung zur fahrerunabhängigen Beeinflussung eines Lenkungselementes bei einem Motorrad.

Es ist eine Aufgabe, die der Erfindung zugrunde liegt, ein eine Vorrichtung und ein Verfahren zum Betreiben eines Kraftrads zu schaffen, welche jeweils zu einem zuverlässigen und sicheren Betrieb sowie zu einem erhöhten Komfort des Kraftrads beitragen können

Die Aufgabe wird durch die Merkmale der unabhängigen Patentansprüche gelöst. Vorteilhafte Ausgestaltungen der Erfindung sind in den Unteransprüchen angegeben.

Gemäß einem Aspekt der Erfindung umfasst eine Vorrichtung zum Betreiben eines Kraftrads eine Lenkeinrichtung mit einem ersten und einem zweiten Griffelement und eine Sensorik zum Erfassen einer Fahrsituation, welche einen Griffsensor umfasst, der in oder an einem der Griffelemente angeordnet ist. Der Griffsensor ist dazu ausgebildet, in einem Betriebszustand der Vorrichtung einen von außerhalb anliegenden Kontakt an dem jeweiligen Griffelement zu erfassen und ein zugehöriges Griff-Messsignal zu generieren. Die Vorrichtung umfasst weiter einen Lenkaktuator, welcher zum Einstellen eines Lenkwinkels bezogen auf eine Lenkachse mit der Lenkeinrichtung gekoppelt ist, sodass in Abhängigkeit von der Fahrsituation und dem Griff-Messsignal ein vorgegebener Lenkwinkel mittels des Lenkaktuators an der Lenkeinrichtung einstellbar ist.

Mittels der beschriebenen Vorrichtung ist ein Lenksystem für ein Kraftrad realisierbar, welches ein sicheres und zuverlässiges Betreiben des Kraftrads ermöglicht und zudem zu einem erhöhten Komfort des Kraftrads beitragen kann. Ein solches Lenksystem basiert auf einer Sensorerfassung an dem Lenker beziehungsweise der Lenkeinrichtung und wird dadurch aktiviert, dass die Lenkeinrichtung von einem Fahrer losgelassen wird und somit kein greifender Kontakt mehr an dem jeweiligen Griffelement anliegt, welches den Griffsensor aufweist. Bevorzugt weisen beide Griffelemente der Lenkeinrichtung jeweils einen Griffsensor auf, dessen Messsignal zum Aktivieren des Lenksystems mit verarbeitet wird. Die Vorrichtung ermöglicht somit ein Loslassen des oder der Griffelemente der Lenkeinrichtung eines Kraftrads bei gleichzeitiger, sicherer und steuerbarer Weiterfahrt des Kraftrads.

Der aktivierte Lenkaktuator bringt in Bezug auf die Lenkachse der Lenkeinrichtung aktiv ein vorgegebenes Lenkmoment auf und ermöglicht somit eine aktive Lenkung beziehungsweise Ansteuerung der Lenkeinrichtung mittels Einstellen eines vorgegebenen Lenkwinkels. Der Lenkaktuator kann beispielsweise als ein elektromechanischer Aktuator ausgebildet sein, wobei eine benötigte Energieversorgung vorzugsweise über das Fahrzeugbordnetz eines zugehörigen Kraftrads realisiert wird.

Ein Griffelement, zum Beispiel dasjenige, welches den Gasgriff realisiert, oder beide Griffelemente werden jeweils mit einem Griffsensor ausgerüstet. Wird mittels des Griffsensors oder der Griffsensoren der Vorrichtung ermittelt, dass zumindest eine Hand eines Fahrers an der Lenkeinrichtung anliegt, erfolgt keine Vorgabe eines Lenkwinkels an der Lenkeinrichtung. Eine solche Situation repräsentiert zum Beispiel einen passiven Betriebszustand oder Ruhezustand der Vorrichtung. Wird die Lenkeinrichtung losgelassen, sodass mittels des oder der Griffsensoren kein anliegender Kontakt mehr ermittelbar ist, so wechselt die Vorrichtung in einem aktiven Betriebszustand, in dem ein Lenkwinkel mittels des Lenkaktuators kontrolliert vorgegeben wird, um beispielsweise die Lenkrichtung beizubehalten oder eine gezielte Änderung der Lenkrichtung einzustellen.

Eine solche Vorgabe der Lenkrichtung, die mittels des Lenkwinkels einstellbar ist, wird somit in Abhängigkeit von dem Griff-Messsignals und der Fahrsituation kontrolliert durchgeführt, sodass der Fahrer auf sichere Weise seine Hände entspannen und seine Sitzposition verändern kann. Die beschriebene Vorrichtung ermöglicht es daher, Taubheitsgefühl in den Händen und Schmerzen aufgrund einer über einen langen Zeitraum eingenommenen Sitzhaltung entgegenzuwirken und kann somit zu einem bequemen Fahren und erhöhten Komfort des Kraftrads beitragen.

Eine aktuelle und voraussichtliche Fahrsituation wird beispielsweise auf Basis weiterer Sensoren ermittelt, sodass zum Beispiel bei einem geraden Streckenabschnitt ein Lenkwinkel von null Grad vorgegeben wird, um die Fahrtrichtung stabil beizubehalten. Allerdings kann auch auf einem geraden Streckenabschnitt ein Korrigieren der Fahrtrichtung in gewissem Maße erforderlich sein, sodass beispielsweise ein kleiner Lenkwinkel von plus ein oder zwei Grad vorgegeben wird, woraufhin die Fahrsituation und Fahrtrichtung erneut ermittelt werden und dann zum Beispiel ein Lenkwinkel von minus ein oder zwei Grad an der Lenkeinrichtung vorgegeben eingestellt wird. Die Fahrsituation wird beispielsweise auf Basis eines optischen Sensors, wie einer Kamera, ermittelt, welche den Straßenverlauf detektiert, sodass eine Fahrtrichtung prognostiziert werden kann.

Erfindungsgemäß weist die Sensorik weiter einen Sitzflächensensor auf, der einer Sitzfläche des Kraftrads zugeordnet ist und der dazu ausgebildet ist, in einem Betriebszustand der Vorrichtung eine Massenverteilung auf der Sitzfläche zu erfassen und ein zugehöriges Sitz-Messsignal zu generieren, sodass in Abhängigkeit von dem Sitz-Messsignal ein vorgegebener Lenkwinkel mittels des Lenkaktuators an der Lenkeinrichtung einstellbar ist. Mittels eines solchen Sitzsensors ist die aktuelle und eine voraussichtliche Fahrsituation ermittelbar, da anhand des erzeugten Sitz-Messsignals von der erfassten Massenverteilung auf der Sitzfläche auf die Haltung oder Neigung des Fahrers auf dem Kraftrad geschlossen werden kann.

Wird eine Massenverteilung detektiert, deren Schwerpunkt in Bezug auf die Sitzfläche im Wesentlichen zentriert ist, kann auf einen geraden Streckenabschnitt geschlossen werden, sodass ein Lenkwinkel von etwa null Grad eingestellt wird. Dahingegen neigt sich der Fahrer bei einer Kurve in Richtung des Krümmungsmittelpunktes, sodass zum Beispiel bei einer Linkskurve der Schwerpunkt der Massenverteilung in Bezug auf die Fahrtrichtung und einen Mittelpunkt der Sitzfläche nach links verlagert ist. Entsprechend der Neigung und der Massenverteilung wird dann beispielsweise ein Lenkwinkel von zehn bis zwanzig Grad mittels des Lenkaktuators eingestellt.

Der Sitzflächensensor ermöglicht somit die Bestimmung einer Sitzbelegung auf der Sitzbank eines Kraftrads. Darüber hinaus umfasst die Vorrichtung vorzugsweise einen Neigungssensor, welcher ein Messen eines Winkels und ein Bestimmen einer Neigung des Kraftrads relativ zu einer befahrenen Bodenfläche ermöglicht. Diese Sensoren können zum Beispiel in einer Sensorbox des Kraftrads integriert werden.

Gemäß einer bevorzugten Weiterbildung der Vorrichtung ist der Lenkaktuator als Linearaktuator ausgebildet und an einem Seitenarm der Lenkeinrichtung mit dieser gekoppelt. Alternativ oder zusätzlich kann der Lenkaktuator als Motor in einem Lenkkopflager der Lenkeinrichtung angeordnet sein. Darüber hinaus kann die Vorrichtung auch mehr als einen Lenkaktuator aufweisen, welche jeweils zum Einstellen eines vorgegebenen Lenkwinkels an der Lenkeinrichtung eingerichtet sind.

Gemäß einer Weiterbildung der Vorrichtung ist der Griffsensor als kapazitiver Sensor ausgebildet. Bei einem anliegenden beziehungsweise greifenden Kontakt an dem Griffelement ändert sich messbar eine Kapazität des Sensors, sodass darauf geschlossen werden kann, dass der Fahrer die Lenkeinrichtung festhält.

Gemäß einer Weiterbildung umfasst die Vorrichtung eine Steuereinheit, welche signaltechnisch mit dem Lenkaktuator, dem Griffsensor und, sofern vorhanden, mit dem Sitzflächensensor gekoppelt ist und in Abhängigkeit von einem jeweiligen Griff-Messsignal und einem Sitz-Messsignal ein Einstellen eines vorgegebenen Lenkwinkels mittels des oder der Lenkaktuatoren an der Lenkeinrichtung steuert. Die Steuereinheit umfasst zu diesem Zweck zum Beispiel eine Recheneinheit und einen Datenspeicher zum Auswerten und Verarbeiten der Daten.

Die Vorrichtung kann ferner eine elektromechanische Drosselklappe umfassen, welche eine Geschwindigkeitssteuerung des Kraftrads ermöglicht. Eine solche Drosselklappe wird insbesondere in modernen Motor- oder Krafträdern bereits eingesetzt. Außerdem kann die Vorrichtung eine Software umfassen, welche ein Verarbeiten der einzelnen Messsignale ermöglicht und eine entsprechende Regelung vornimmt. Eine solche Software kann zum Beispiel in der Steuereinheit der Vorrichtung hinterlegt sein, welche das Ausführen der entsprechenden Anweisungen ermöglicht sowie das Empfangen der jeweiligen Messsignale und insbesondere das Steuern des oder der Lenkaktuatoren kontrolliert.

Gemäß einem weiteren Aspekt der Erfindung umfasst ein System ein Kraftrad und eine Ausgestaltung der zuvor beschriebenen Vorrichtung, welche in oder an dem Kraftrad angeordnet ist. Die Vorrichtung realisiert insbesondere ein vorteilhaftes Lenksystem des Kraftrads, das zu einem komfortablen und sicheren Betreiben des Kraftrads beiträgt. Dadurch, dass das System eine Ausgestaltung der zuvor beschriebenen Vorrichtung umfasst, sind sämtliche Merkmale und Eigenschaften der Vorrichtung auch für das System offenbart und umgekehrt.

Gemäß einem weiteren Aspekt der Erfindung umfasst ein Verfahren zum Betreiben eines Kraftrads mittels einer Ausgestaltung der zuvor beschriebenen Vorrichtung ein Ermitteln eines von außerhalb anliegenden Kontakts an dem Griffelement mittels des Griffsensors und ein Generieren eines zugehörigen Griff-Messsignals. Das Verfahren umfasst weiter ein Aktivieren des Lenkaktuators in Abhängigkeit von dem Griff-Messsignal des Griffsensors und ein Ermitteln einer Fahrsituation mittels der Sensorik des Kraftrads. Außerdem umfasst das Verfahren ein Steuern der Lenkeinrichtung des Kraftrads durch Einstellen eines vorgegebenen Lenkwinkels mittels des Lenkaktaktuators an der Lenkeinrichtung in Abhängigkeit von dem Griff-Messsignal und der Fahrsituation.

Ein solches Verfahren kann, wie auch die Vorrichtung, zu einem zuverlässigen und sicheren Betrieb sowie zu einem erhöhten Komfort des Kraftrads beitragen. Dadurch, dass der Fahrer die Lenkeinheit loslassen kann und das Kraftrad mittels der Vorrichtung automatisch gesteuert wird, kann der Fahrer Hände und Rücken entspannen, sodass das beschriebene Verfahren einen Beitrag zu einem angenehmen und komfortablen Fahrzyklus leisten kann. Das Aktivieren des Lenksystems beziehungsweise des Lenkaktuators und Steuern der Lenkeinrichtung des Kraftrads erfolgt, wenn kein von außerhalb anliegender Kontakt an dem Griffelement ermittelt wird.

Das Ermitteln einer Fahrsituation umfasst erfindungsgemäß ein Erfassen einer Massenverteilung auf der Sitzfläche des Kraftrads mittels des Sitzflächensensors, welcher in oder an der Sitzfläche angeordnet ist. Ein entsprechend generiertes Sitz-Messsignal ist repräsentativ für die erfasste Massenverteilung, sodass ein Steuern der Lenkeinrichtung des Kraftrads durch Einstellen eines vorgegebenen Lenkwinkels mittels des Lenkaktaktuators an der Lenkeinrichtung in Abhängigkeit von dem Sitz-Messsignal durchführbar ist.

Darüber hinaus kann das Verfahren gemäß einer Weiterbildung ein Ermitteln einer Aufmerksamkeit eines Fahrers des Kraftrads in Abhängigkeit von dem Griff-Messsignal des Griffsensors umfassen. Ein Steuern der Lenkeinrichtung des Kraftrads kann dann zum Beispiel durch Einstellen eines vorgegebenen Lenkwinkels mittels des Lenkaktaktuators an der Lenkeinrichtung auch in Abhängigkeit von der ermittelten Aufmerksamkeit des Fahrers erfolgen.

Die Aufmerksamkeit des Fahrers kann zum Beispiel mittels des Griffsensors dadurch ermittelt werden, dass in vorgegebenen Zeitintervallen ein Kontakt an der Lenkeinrichtung und dem jeweiligen Griffelement erfolgen soll. Beispielsweise ist ein zeitlicher Schwellenwert vorgegeben, innerhalb dessen ein kontaktloses Griffelement der Lenkeinrichtung tolerierbar ist. Ein solcher Schwellenwert beträgt zum Beispiel 30 Sekunden, sodass der Fahrer innerhalb dieser Zeitvorgabe die Lenkeinrichtung und das jeweilige Griffelement berühren soll, um zu bestätigen, dass er aufmerksam ist. Erfolgt nach Ablauf des zeitlichen Schwellenwertes kein Kontakt an dem Griffelement kann zum Beispiel durch die Steuereinheit ein Alarmsignal bereitgestellt werden, welches als Warnton oder als blinkendes Licht für den Fahrer ausgegeben werden. Alternativ oder zusätzlich kann mittels der Steuereinheit eine elektromechanische Drosselklappe des Kraftrads angesteuert werden, um die Geschwindigkeit des Kraftrads zu reduzieren. Darüber hinaus kann ein Erfassen einer Aufmerksamkeit auch mittels weiterer Sensoren in oder an der Lenkeinheit erfolgen, indem zum Beispiel mittels einer Kamera eine Kopfneigung des Fahrers beobachtet wird. Schaut der Fahrer zu lange nach links oder rechts beziehungsweise nicht auf die Fahrbahn oder neigt sich der Kopf gemäß einer einschlafenden Person nach unten, so kann auf eine nicht ausreichende Aufmerksamkeit geschlossen werden.

Das aktive Lenksystem wird vom Fahrer des Kraftrads durch das Loslassen des oder der sensorbestückten Griffelemente während der Fahrt aktiviert. Das Loslassen wird über den kapazitiven Sensor in dem jeweiligen Griffelement detektiert und als Griff-Messsignal der Steuereinheit der Vorrichtung bereitgestellt. Die Lenkaufgabe wird nun mittels der Steuereinheit automatisiert durchgeführt. Über den Sitzflächensensor in der Sitzbank wird die Neigung der Hüfte des Fahrers über die Massenverteilung, insbesondere nach links oder rechts in Bezug auf eine Fahrtrichtung, detektiert.

Bei ermittelter neutraler Sitzposition des Fahrers behält das Kraftrad mittels Ansteuern des Lenkaktuators und Vorgabe eines entsprechenden Lenkwinkels selbstständig die Fahrtrichtung geradeaus bei und regelt diese über den Neigungssensor ein. Mittels Steuern der elektromechanischen Drosselklappe kann die Geschwindigkeit ebenfalls automatisch beibehalten werden. Die Vorgabe des Lenkwinkels erfolgt somit bevorzugt in Abhängigkeit von der Sitzposition des Fahrers. Neigt der Fahrer seine Hüfte nach links beziehungsweise rechts, so wird mittels der Steuereinheit der Lenkaktuator angesteuert und ein Lenkwinkel vorgegeben und somit die Lenkerstellung entsprechend eingerichtet, sodass eine Änderung der Fahrtrichtung nach links beziehungsweise nach rechts erfolgt. Auf diese Weise kann auch bei nicht ideal-gerade verlaufenden Straßenabschnitten der Kurvenstruktur sicher und zuverlässig gefolgt werden, ohne dass der Fahrer zur Lenkeinheit greifen und die Fahrlinie händisch nachkorrigieren muss.

Mit der beschriebenen Vorrichtung, dem zugehörigen System und dem korrespondierendem Verfahren ist es möglich eine automatisierte Querführung des Motor- beziehungsweise Kraftrades zu erreichen. Bei besonders langen Fahrten kann der Fahrer seine Hände, insbesondere bei Geradeausfahrten, entspannen. Des Weiteren sorgt die Möglichkeit, sich aus der gebückten Haltung kurzzeitig in eine aufrechte Haltung zu bewegen, für eine Reduzierung von Rückenschmerzen und Handgelenkstaubheit und führt somit zu einer erhöhten Konzentration des Fahrers, sodass Fahrfehlern entgegengewirkt und das Risiko eines Unfalls aufgrund mangelnder Konzentration des Fahrers reduziert wird. Entsprechend können die Vorrichtung, das System und das Verfahren somit einen Beitrag zu einer erhöhten Sicherheit im Straßenverkehr leisten.

Mit der Neigung des Körpers kann der Fahrer auch leichte Kurven durchfahren ohne dabei seine Hände an die Griffelemente der Lenkeinheit legen zu müssen. Auf diese Weise können nicht-ideal gerade Straßen problemlos durchfahren werden. Des Weiteren kann das beschriebene Lenksystem auch dazu genutzt werden, um die Schwingungen in der Lenkachse der Lenkeinheit zu reduzieren. Abhängig von den Schwingungen in der Lenkung können diese durch die Vorgabe eines aktiven Lenkmomentes durch Einstellen eines Lenkwinkels mittels des Lenkaktuators kompensiert oder zumindest reduziert werden. Somit ist mittels der beschriebenen Vorrichtung ein automatisiertes Lenksystem für ein Kraftrad realisierbar, welches zudem als aktiver Lenkungsdämpfer wirken kann.

Ausführungsbeispiele der Erfindung sind im Folgenden anhand der schematischen Zeichnungen näher erläutert. Es zeigen:
- Figur 1: ein schematisches Ausführungsbeispiel eines Systems mit einem Kraftrad,
- Figur 2: ein weiteres schematisches Ausführungsbeispiel des Systems mit einem Kraftrad,
- Figur 3: ein weiteres schematisches Ausführungsbeispiel des Systems mit einem Kraftrad,
- Figur 4: ein schematisches Ablaufdiagramm für Verfahren zum Betreiben eines Kraftrads.

Elemente gleicher Konstruktion oder Funktion sind figurenübergreifend mit den gleichen Bezugszeichen gekennzeichnet. Aus Gründen der Übersichtlichkeit sind die dargestellten Elemente gegebenenfalls nicht in allen Figuren mit Bezugszeichen gekennzeichnet.

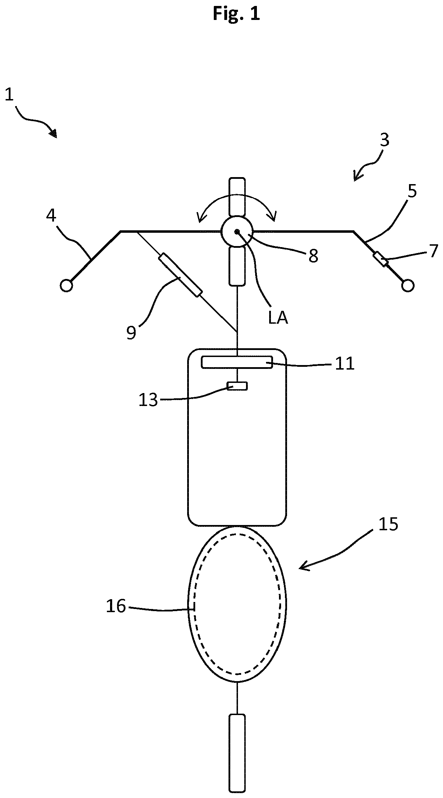

Figur 1 illustriert ein Ausführungsbeispiel eines Systems mit einem Kraftrad 1 in einer schematischen Aufsicht. Das System weist ferner eine Vorrichtung zum Betreiben des Kraftrads 1 auf, die ein aktives Lenksystem des Kraftrads 1 ausbildet. Die Vorrichtung umfasst eine Lenkeinrichtung 3 mit einem ersten und einem zweiten Griffelement 4 und 5 sowie eine Sensorik zum Erfassen einer Fahrsituation, welche einen Griffsensor 7 umfasst, der in oder an einem der Griffelemente 4, 5 angeordnet ist. In dem in Figur 1 illustrierten Ausführungsbeispiel ist der Griffsensor 7 an dem in Aufsicht rechten Griffelement 5 angeordnet, welcher zum Beispiel einen Gasgriff des Kraftrads 1 realisiert.

Der Griffsensor 7 ist dazu ausgebildet, in einem Betriebszustand der Vorrichtung einen von außerhalb anliegenden Kontakt an dem Griffelement 5 zu erfassen und ein zugehöriges Griff-Messsignal zu generieren. Die Vorrichtung umfasst weiter einen Lenkaktuator 9, welcher zum Einstellen eines Lenkwinkels bezogen auf eine Lenkachse LA mit der Lenkeinrichtung 3 gekoppelt ist, sodass in Abhängigkeit von der Fahrsituation und dem Griff-Messsignal ein vorgegebener Lenkwinkel mittels des Lenkaktuators 9 an der Lenkeinrichtung 3 einstellbar ist. In dem in Figur 1 illustrierten Ausführungsbeispiel ist der Lenkaktuator 9 als Linearaktuator ausgestaltet und mit einem in Aufsicht linken Seitenarm der Lenkeinrichtung 3 gekoppelt.

Außerdem weist die Vorrichtung einen Geschwindigkeitsregler 13, welcher beispielsweise als elektromechanische Drosselklappe ausgebildet ist, und eine Steuereinheit 11 auf, welche ein Einstellen eines vorgegebenen Lenkwinkels und ein Steuern der Lenkeinrichtung 3 kontrolliert. Zu diesem Zweck sind der Griffsensor 7 und der Lenkaktuator 9 wie auch der Geschwindigkeitsregler 13 signaltechnisch mit der Steuereinheit 11 gekoppelt. Darüber hinaus umfasst die Vorrichtung einen Sitzflächensensor 16, welcher in einer Sitzfläche 15 des Kraftrads 1 integriert ist und welcher ein Erfassen einer Massenverteilung auf der Sitzfläche 15 und ein Generieren eines zugehörigen Sitz-Messsignals ermöglicht.

Ein Einstellen eines vorgegebenen Lenkwinkels an der Lenkeinrichtung 3 mittels des Lenkaktuators 9 erfolgt bevorzugt in Abhängigkeit von dem Sitz-Messsignals des Sitzflächensensors 16, dem Griff-Messsignal des Griffsensors 7, welcher zum Beispiel als kapazitiver Sensor ausgestaltet ist, und gegebenenfalls auch in Abhängigkeit eines Messsignals eines Neigungssensors, welcher ein Messen eines Winkels und ein Bestimmen einer Neigung des Kraftrads 1 relativ zu einer befahrenen Bodenfläche ermöglicht. Anhand des Sitzflächensensors 16 und des Neigungssensors kann eine aktuelle und eine voraussichtliche Fahrsituation ermittelt werden, welche durch die Steuereinheit 11 beim Einstellen eines vorgegebenen Lenkwinkels mit verarbeitet wird.

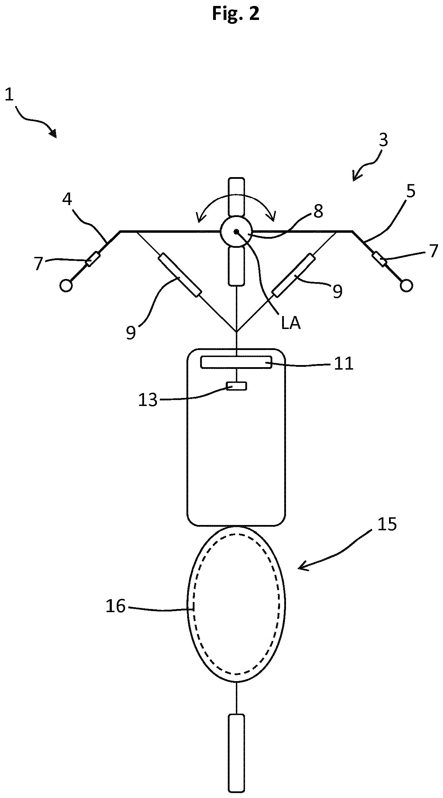

Figur 2 illustriert ein weiteres Ausführungsbeispiel des Kraftrads 1 in einer schematischen Aufsicht, bei dem die Vorrichtung im Unterschied zu Figur 1 einen weiteren Griffsensor 7 in oder an dem linken Griffelement 4 sowie einen weiteren Lenkaktuator 9 in Form eines Linearaktuators aufweist, welcher mit dem rechten Seitenarm der Lenkeinrichtung 3 gekoppelt ist. Auf diese Weise können ein besonders zuverlässiges Ermitteln eines greifenden oder anliegenden Kontakts einer Hand eines Fahrers an der Lenkeinrichtung 3 sowie ein sicheres und stabiles Steuern der Lenkeinrichtung durch Einstellen eines jeweiligen Lenkwinkels mittels des zugehörigen Lenkaktuators 9 durchgeführt werden.

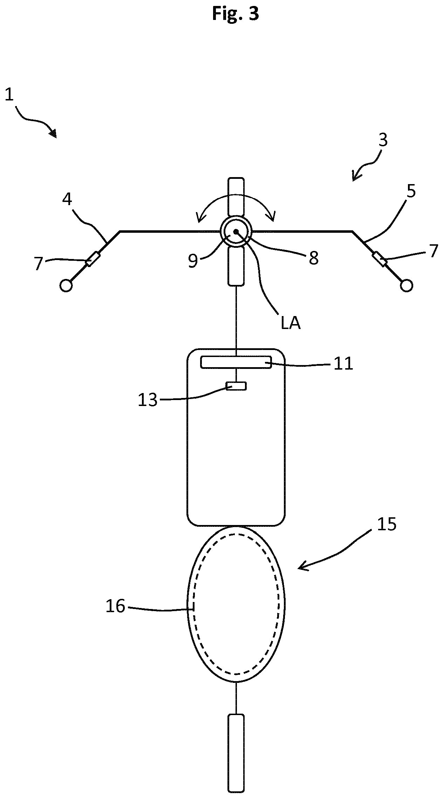

Figur 3 illustriert ein weiteres Ausführungsbeispiel des Kraftrads 1 in einer schematischen Aufsicht, bei dem die Vorrichtung im Unterschied zu den Figuren 1 und 2 einen Lenkaktuator 9 in Form eines Antriebs oder Motors aufweist, welcher in einem Lenkkopflager 8 des Kraftrads 1 angeordnet ist. Gemäß weiteren Ausgestaltungen der Vorrichtung können auch zusätzlich zu einem im Lenklagerkopf 8 angeordneten Motor ein oder mehrere Linearaktuatoren vorgesehen sein, um ein besonders sicheres und zuverlässiges Steuern der Lenkreinrichtung 3 zu ermöglichen.

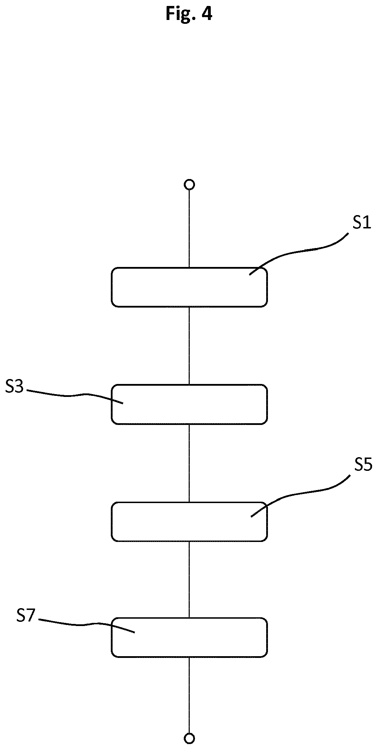

Der jeweilige Lenkaktuator 9 ist dazu ausgebildet, ein aktives Lenkmoment um die Lenkachse LA aufzubringen, um einen gewünschten Lenkwinkel einzustellen. Der Lenkaktuator 9 kann beispielsweise als ein elektromechanischer Aktuator ausgestaltet sein, wobei eine Energieversorgung über ein Fahrzeugbordnetz des Kraftrads 1 realisiert werden kann. Zum Steuern der Lenkeinrichtung 3 mittels der Steuereinheit 11 und des oder der Lenkaktuatoren 9 weist die Vorrichtung eine Software mit ausführbaren Anweisungen auf, die ein Verfahren zum Betreiben des Kraftrads 1 gemäß dem in Figur 4 illustrierten Ablaufdiagramm und automatisches Regeln des Lenksystems ermöglicht.

In einem Schritt S1 wird anhand des oder der Griffsensoren 7 ermittelt, ob ein Kontakt an dem jeweiligen Griffelement 4, 5 vorliegt und ein zugehöriges Griff-Messsignal generiert.

Im Falle, dass der Fahrer des Kraftrads 1 die sensorbestückten Griffelemente 4, 5 loslässt und infolgedessen ermittelt wird, dass kein Kontakt an dem jeweiligen Griffelement 4, 5 vorliegt, wird in einem Schritt S3 das durch die Vorrichtung realisierte Lenksystem aktiviert.

In einem weiteren Schritt S5 wird nun die Lenkaufgabe automatisiert durchgeführt, indem mittels der Steuereinheit 11 der oder die Lenkaktuatoren 9 gezielt angesteuert und dadurch ein vorgegebener Lenkwinkel der Lenkeinrichtung 3 bezogen auf die Lenkachse LA eingestellt werden. Dabei wird mittels des Sitzflächensensors 16 in der Sitzbank des Kraftrads 1 die Neigung der Hüfte des Fahrers über die Massenverteilung links/rechts detektiert. Bei neutraler Sitzposition wird zum Beispiel bezogen auf eine Fahrtrichtung ein Lenkwinkel von etwa null Grad eingestellt, sodass das Kraftrad 1 selbstständig die Fahrtrichtung geradeaus beibehält. Anhand des Neigungssensors kann die Einstellung des Lenkwinkels verifiziert werden und mittels Steuern des Geschwindigkeitsreglers 13 kann eine Geschwindigkeit des Kraftrads 1 automatisch beibehalten oder angepasst werden.

Die Vorgabe des Lenkwinkels erfolgt insbesondere abhängig von der Sitzposition des Fahrers. So kann in einem weiteren Schritt S7 ein Neigen des Fahrers ermittelt werden, wenn dieser sein Gewicht nach links oder rechts verlagert, sodass mittels der Steuereinheit 11 der jeweilige Lenkaktuator 9 angesteuert und die Lenkeinrichtung 3 ausgerichtet wird. Auf diese Weise kann eine Änderung der Fahrtrichtung nach links oder rechts eingeleitet werden, sodass auch bei nicht ideal-gerade verlaufenden Straßenabschnitten der Kurvenstruktur gefolgt werden kann, ohne dass Fahrer nach vorne zu einem Griffelement 4, 5 greifen und die Fahrlinie händisch nachkorrigieren muss.

Das aktive Lenksystem wird vom Fahrer des Kraftrads 1 durch das Loslassen des oder der sensorbestückten Griffelemente 4, 5 während der Fahrt aktiviert. Das Loslassen wird über den jeweiligen Griffsensor 7 in dem jeweiligen Griffelement 4, 5 detektiert und als Griff-Messsignal der Steuereinheit 11 der Vorrichtung bereitgestellt. Mit der Neigung des Körpers kann der Fahrer somit Kurven durchfahren, ohne dabei seine Hände an die Griffelemente 4, 5 der Lenkeinheit 3 legen zu müssen. Eine Vorgabe des Lenkwinkels erfolgt somit in Abhängigkeit von der Sitzposition des Fahrers.

Mit der beschriebenen Vorrichtung, dem zugehörigen System und dem korrespondierendem Verfahren ist es möglich eine automatisierte Querführung des Motor- beziehungsweise Kraftrades 1 zu erreichen. Bei besonders langen Fahrten kann der Fahrer somit seine Hände, insbesondere bei Geradeausfahrten, entspannen. Des Weiteren sorgt die Möglichkeit, sich aus der gebückten Haltung kurzzeitig in eine aufrechte Haltung zu bewegen, für eine Reduzierung von Rückenschmerzen und Handgelenkstaubheit und führt somit zu einer verbesserten Konzentration des Fahrers, sodass Fahrfehlern entgegengewirkt und das Risiko eines Unfalls aufgrund mangelnder Konzentration des Fahrers reduziert wird. Entsprechend können die Vorrichtung, das System und das Verfahren somit einen Beitrag zu einer erhöhten Sicherheit im Straßenverkehr leisten.

### Bezugszeichenliste

- 1: Kraftrad
- 3: Lenkeinrichtung des Kraftrads
- 4: erstes Griffelement der Lenkeinrichtung
- 5: zweites Griffelement der Lenkeinrichtung
- 7: Griffsensor
- 8: Lenkkopflager der Lenkeinrichtung
- 9: Lenkaktuator
- 11: Steuereinheit des Kraftrads
- 13: Geschwindigkeitsregler des Kraftrads
- 15: Sitzfläche des Kraftrads
- 16: Sitzflächensensor des Kraftrads

- LA: Lenkachse des Lenkers
- S(i): jeweiliger Schritt eines Verfahrens zum Betreiben eines Kraftrads

## Patentansprüche

1. Vorrichtung zum Betreiben eines Kraftrads (1), umfassend:
- eine Lenkeinrichtung (3) mit einem ersten und einem zweiten Griffelement (4, 5),
- eine Sensorik zum Erfassen einer Fahrsituation, welche einen Griffsensor (7) umfasst, der in oder an einem der Griffelemente (4, 5) angeordnet ist und der dazu ausgebildet ist, in einem Betriebszustand der Vorrichtung einen von außerhalb anliegenden Kontakt an dem jeweiligen Griffelement (4, 5) zu erfassen und ein zugehöriges Griff-Messsignal zu generieren,
- einen Lenkaktuator (9), welcher zum Einstellen eines Lenkwinkels bezogen auf eine Lenkachse (LA) mit der Lenkeinrichtung (3) gekoppelt ist, und **dadurch gekennzeichnet,**
**dass** die Sensorik weiter einen Sitzflächensensor (16) umfasst, der einer Sitzfläche (15) des Kraftrads (1) zugeordnet ist und der dazu ausgebildet ist, in einem Betriebszustand der Vorrichtung eine Massenverteilung auf der Sitzfläche (15) zu erfassen und ein zugehöriges Sitz-Messsignal zu generieren,
wobei in Abhängigkeit von der Fahrsituation und dem Griff-Messsignal sowie von dem Sitz-Messsignal ein vorgegebener Lenkwinkel mittels des Lenkaktuators (9) an der Lenkeinrichtung (3) einstellbar ist, wenn das jeweilige Griffelement (4, 5) von außerhalb kontaktlos ist.

2. Vorrichtung nach Anspruch 1, bei der der Lenkaktuator (9) als Linearaktuator ausgebildet und an einem Seitenarm der Lenkeinrichtung (3) mit dieser gekoppelt ist.

3. Vorrichtung nach einem der Ansprüche 1 bis 2, bei der der Lenkaktuator (9) als Antrieb in einem Lenkkopflager (8) der Lenkeinrichtung (3) angeordnet ist.

4. Vorrichtung nach einem der Ansprüche 1 bis 3, bei der der Griffsensor (7) als kapazitiver Sensor ausgebildet ist.

5. Vorrichtung nach einem der Ansprüche 1 bis 4, umfassend:
eine Steuervorrichtung (11), welche signaltechnisch mit dem Lenkaktuator (9), dem Griffsensor (7) und mit dem Sitzflächensensor (16) gekoppelt ist und dazu eingerichtet ist, in Abhängigkeit von einem jeweiligen Griff-Messsignal und in Abhängigkeit von einem Sitz-Messsignal einen vorgegebenen Lenkwinkel mittels des Lenkaktuators (9) an der Lenkeinrichtung (3) einzustellen.

6. System, umfassend:
- ein Kraftrad (1), und
- eine Vorrichtung zum Betreiben des Kraftrads (1) nach einem der Ansprüche 1 bis 5, welche in oder an dem Kraftrad (1) angeordnet ist.

7. Verfahren zum Betreiben eines Kraftrads (1) mittels einer Vorrichtung nach einem der Ansprüche 1 bis 6, umfassend:
- Ermitteln eines von außerhalb anliegenden Kontakts an dem Griffelement (4, 5) mittels des Griffsensors (7) und Generieren eines zugehörigen Griff-Messsignals,
- Aktivieren des Lenkaktuators (9) in Abhängigkeit von dem Griff-Messsignal des Griffsensors (7), wenn kein von außerhalb anliegender Kontakt an dem Griffelement (4, 5) ermittelt wird,
- Ermitteln einer Fahrsituation mittels der Sensorik des Kraftrads (1),
- Erfassen einer Massenverteilung auf der Sitzfläche (15) des Kraftrads (1) mittels des Sitzflächensensors (16), welcher in oder an der Sitzfläche (15) angeordnet ist, und Generieren eines zugehörigen Sitz-Messsignals, und
- Steuern der Lenkeinrichtung (3) des Kraftrads (1) durch Einstellen eines vorgegebenen Lenkwinkels mittels des Lenkaktaktuators (9) an der Lenkeinrichtung (3) in Abhängigkeit von der Fahrsituation, dem Sitz-Messsignal und dem Griff-Messsignal des Griffsensors (7), wenn kein von außerhalb anliegender Kontakt an dem Griffelement (4, 5) ermittelt wird.

8. Verfahren nach Anspruch 7, bei dem das Ermitteln einer Fahrsituation umfasst:
- Ermitteln einer Aufmerksamkeit eines Fahrers des Kraftrads (1) in Abhängigkeit von dem Griff-Messsignal des Griffsensors (7), und
- Steuern der Lenkeinrichtung (3) des Kraftrads (1) durch Einstellen eines vorgegebenen Lenkwinkels mittels des Lenkaktaktuators (9) an der Lenkeinrichtung (3) in Abhängigkeit von der ermittelten Aufmerksamkeit des Fahrers.

## Claims

1. Means for operating a motorcycle (1), comprising:
- a steering device (3) with a first and a second grip element (4, 5),
- a sensor system for detecting a riding situation, which sensor system comprises a grip sensor (7) which is arranged in or on one of the grip elements (4, 5) and which is designed to, in an operating state of the means, detect external contact on the respective grip element (4, 5) and generate an associated grip measurement signal, and
- a steering actuator (9) which is coupled to the steering device (3) for the purposes of setting a steering angle with respect to a steering axis (LA), and **characterized in that** the sensor system furthermore comprises a seat surface sensor (16) which is assigned to a seat surface (15) of the motorcycle (1) and which is designed to, in an operating state of the means, detect a mass distribution on the seat surface (15) and generate an associated seat measurement signal,
wherein, in a manner dependent on the riding situation and the grip measurement signal and also on the seat measurement signal, a predefined steering angle can be set at the steering device (3) by way of the steering actuator (9) if the respective grip element (4, 5) is free from external contact.

2. Means according to Claim 1, wherein the steering actuator (9) is designed as a linear actuator and is coupled to the steering device (3) at a side arm of the latter.

3. Means according to either of Claims 1 and 2, wherein the steering actuator (9) is arranged as a drive in a steering-head bearing (8) of the steering device (3).

4. Means according to any of Claims 1 to 3, wherein the grip sensor (7) is designed as a capacitive sensor.

5. Means according to any of Claims 1 to 4, comprising: a control device (11) which is coupled in terms of signal transmission to the steering actuator (9), to the grip sensor (7) and to the seat surface sensor (16) and which is configured to, in a manner dependent on a respective grip measurement signal and in a manner dependent on a seat measurement signal, set a predetermined steering angle at the steering device (3) by way of the steering actuator (9).

6. System comprising:
- a motorcycle (1), and
- a means for operating the motorcycle (1) according to any of Claims 1 to 5, which means is arranged in or on the motorcycle (1).

7. Method for operating a motorcycle (1) by means of a means according to any of Claims 1 to 6, comprising:
- determining external contact on the grip element (4, 5) by means of the grip sensor (7) and generating an associated grip measurement signal,
- activating the steering actuator (9) in a manner dependent on the grip measurement signal from the grip sensor (7) if no external contact on the grip element (4, 5) is determined,
- determining a riding situation by means of the sensor system of the motorcycle (1),
- detecting a mass distribution on the seat surface (15) of the motorcycle (1) by means of the seat surface sensor (16), which is arranged in or on the seat surface (15), and generating an associated seat measurement signal, and
- controlling the steering device (3) of the motorcycle (1) by setting a predefined steering angle at the steering device (3) by means of the steering actuator (9) in a manner dependent on the riding situation, the seat measurement signal and the grip measurement signal of the grip sensor (7) if no external contact on the grip element (4, 5) is determined.

8. Method according to Claim 7, in which the determination of a riding situation comprises:
- determining an attentiveness of a rider of the motorcycle (1) in a manner dependent on the grip measurement signal of the grip sensor (7), and
- controlling the steering device (3) of the motorcycle (1) by setting a predefined steering angle at the steering device (3) by means of the steering actuator (9) in a manner dependent on the determined attentiveness of the rider.

## Revendications

1. Arrangement pour faire fonctionner une motocyclette (1), comprenant :
- un dispositif de direction (3) pourvu d'un premier et d'un deuxième élément formant poignée (4, 5),
- un ensemble de détection destiné à détecter une situation de conduite, lequel comprend un capteur de poignée (7) qui est disposé dans ou sur l'un des éléments formant poignée (4, 5) et qui est configuré pour, dans un état de fonctionnement de l'arrangement, détecter un contact appliqué depuis l'extérieur sur ledit élément formant poignée (4, 5) et générer un signal de mesure de poignée associé,
- un actionneur de direction (9), lequel est couplé au dispositif de direction (3) pour régler un angle de braquage en référence à un axe de direction (LA), et **caractérisé en ce**
**que** l'ensemble de détection comporte en outre un capteur de surface de siège (16), lequel est associé à une surface de siège (15) de la motocyclette (1) et est configuré pour, dans un état de fonctionnement de l'arrangement, détecter une répartition des messages sur la surface de siège (15) et générer un signal de mesure de siège associé, un angle de braquage prédéfini pouvant être réglé au niveau du dispositif de direction (3) au moyen de l'actionneur de direction (9) en fonction de la situation de conduite et du signal de mesure de poignée ainsi que du signal de mesure de siège lorsque l'élément formant poignée (4, 5) respectif est exempt de contact de l'extérieur.

2. Arrangement selon la revendication 1, avec lequel l'actionneur de direction (9) est réalisé sous la forme d'un actionneur linéaire et est couplé au dispositif de direction (3) au niveau d'un bras latéral de celui-ci.

3. Arrangement selon l'une des revendications 1 à 2, avec lequel l'actionneur de direction (9) est disposé sous la forme d'un mécanisme d'entraînement dans un palier de tête de direction (8) du dispositif de direction (3).

4. Arrangement selon l'une des revendications 1 à 3, avec lequel le capteur de poignée (7) est réalisé sous la forme d'un capteur capacitif.

5. Arrangement selon l'une des revendications 1 à 4, comprenant :
un arrangement de commande (11), qui est couplé e manière signalétique à l'actionneur de direction (9), au capteur de poignée (7) et au capteur de surface de siège (16) et qui est conçu pour régler un angle de braquage prédéfini au niveau du dispositif de direction (3) au moyen de l'actionneur de direction (9) en fonction d'un signal de mesure de poignée respectif et en fonction d'un signal de mesure de siège.

6. Système, comprenant :
- une motocyclette (1) et
- un arrangement pour faire fonctionner la motocyclette (1) selon l'une des revendications 1 à 5, lequel est disposé dans ou sur la motocyclette (1).

7. Procédé pour faire fonctionner une motocyclette (1) au moyen d'un arrangement selon l'une des revendications 1 à 6, comprenant :
- détermination d'un contact appliqué depuis l'extérieur sur l'élément formant poignée (4, 5) au moyen du capteur de poignée (7) et génération d'un signal de mesure de poignée associé,
- activation de l'actionneur de direction (9) en fonction du signal de mesure de poignée du capteur de poignée (7) lorsqu'aucun contact appliqué depuis l'extérieur sur l'élément formant poignée (4, 5) est déterminé,
- détermination d'une situation de conduite au moyen de l'ensemble de détection de la motocyclette (1),
- détection d'une répartition des messages sur la surface de siège (15) de la motocyclette (1) au moyen du capteur de surface de siège (16), lequel est disposé dans ou sur la surface de siège (15), et génération d'un signal de mesure de siège associé, et
- commande du dispositif de direction (3) de la motocyclette (1) par réglage d'un angle de braquage prédéfini au niveau du dispositif de direction (3) au moyen de l'actionneur de direction (9) en fonction de la situation de conduite, du signal de mesure de siège et du signal de mesure de poignée du capteur de poignée (7) lorsqu'aucun contact appliqué depuis l'extérieur sur l'élément formant poignée (4, 5) est déterminé.

8. Procédé selon la revendication 7, avec lequel la détermination de la situation de conduite comprend :
- détermination d'une vigilance d'un conducteur de la motocyclette (1) en fonction du signal de mesure de poignée du capteur de poignée (7) et
- commande du dispositif de direction (3) de la motocyclette (1) par réglage d'un angle de braquage prédéfini au niveau du dispositif de direction (3) au moyen de l'actionneur de direction (9) en fonction de la vigilance déterminée du conducteur.
